# EUROPEAN PATENT SPECIFICATION

(11) **EP 3 349 271 B1**
(45) Date of publication and mention of the grant of the patent: **20.11.2019**
(21) Application number: 18151338.3
(22) Date of filing: 12.01.2018
(51) Int. Cl.: H01M 2/30, H01M 2/10, H01M 2/34, H01M 2/20, H01M 10/04

(54) **METHOD OF MANUFACTURING ENERGY STORAGE APPARATUS, AND ENERGY STORAGE APPARATUS**
VERFAHREN ZUR HERSTELLUNG EINER ENERGIESPEICHERVORRICHTUNG UND ENERGIESPEICHEREINRICHTUNG
PROCÉDÉ DE FABRICATION D'UN APPAREIL DE STOCKAGE D'ÉNERGIE ET APPAREIL DE STOCKAGE D'ÉNERGIE

(30) Priority: 16.01.2017 JP 2017005398; 25.10.2017 JP 2017206594
(43) Date of publication of application: 18.07.2018
(73) Proprietor: GS Yuasa International Ltd., Kisshoin, Minami-ku, Kyoto-shi, Kyoto 601-8520 (JP)
(72) Inventor: TONONISHI, Masamitsu, Kyoto-shi, Kyoto 601-8520 (JP)
(74) Representative: Grünecker Patent- und Rechtsanwälte PartG mbB

(56) References cited:
- JP-A- 2013 161 516
- US-A1- 2004 209 164
- US-A1- 2012 064 387

## Description

### FIELD

The present invention relates to a method of manufacturing an energy storage apparatus, and an energy storage apparatus.

### BACKGROUND

Conventionally, there has been known a method where, for simultaneously detecting whether or not a positive electrode terminal and a negative electrode terminal of an energy storage device are in a normal state, a pair of terminal detection rings and a pair of detection limit switches are used (see JP 52-90043 A, for example).

However, in the above-mentioned conventional method, it is possible to detect only whether or not the respective terminals are in a normal state, and it is difficult to determine whether the electrode terminal is the positive electrode terminal or the negative electrode terminal. US 2004/209164; US2012/064387 and JP 2013 161516 all disclose battery cells with differently shaped positive and negative terminals

### SUMMARY

Accordingly, it is an object of the present invention to provide a technique with which whether an electrode terminal is a positive electrode terminal or a negative electrode terminal can be determined while determining an assembling error in a height direction between terminals disposed adjacently.

According to an aspect of the present invention, there is provided a method of manufacturing an energy storage apparatus which includes a plurality of energy storage devices each provided with a positive electrode terminal and a negative electrode terminal having terminal height measuring portions respectively which differ in a surface shape, the method including measuring a height of the terminal height measuring portion of the positive electrode terminal and a height of the terminal height measuring portion of the negative electrode terminal, and comparing the measured height of the positive electrode terminal and the measured height of the negative electrode terminal with a reference value.

According to another aspect of the invention, there is provided an energy storage apparatus comprising a plurality of energy storage devices, each energy storage device having a positive electrode terminal and a negative electrode terminal wherein positive electrode terminals disposed adjacently are connected by a conductive member by welding, or wherein negative electrode terminals disposed adjacently are connected by the conductive member by welding, or wherein the positive electrode terminal and the negative electrode terminal are connected by the conductive member by welding, and the positive electrode terminals and the negative electrode terminals have terminal height measuring portions respectively which differ in a surface shape.

### BRIEF DESCRIPTION OF DRAWINGS

FIG. 1 is an exploded perspective view of an energy storage apparatus according to an embodiment.
FIG. 2A is a plan view of an energy storage device shown in FIG. 1, and FIG. 2B is a cross-sectional view of the energy storage device taken along a line A-A.
FIG. 3 is a perspective view showing a state where the energy storage devices are accommodated in a body shown in FIG. 1.
FIG. 4 is a perspective view showing a state where bus bars are mounted on the energy storage devices shown in FIG. 3.
FIG. 5A is a plan view showing a state where distances to respective terminals are measured by an optical measuring device in a situation shown in FIG. 3, and FIG. 5B is a front view showing the state.
FIG. 6 is an enlarged cross-sectional view of a positive electrode terminal of the energy storage device and a negative electrode terminal of the energy storage device.
FIG. 7 is a cross-sectional front view showing a portion of an energy storage device according to another embodiment.

### DESCRIPTION OF EMBODIMENTS

According to an aspect of the present invention, there is provided a method of manufacturing an energy storage apparatus which includes a plurality of energy storage devices each provided with a positive electrode terminal and a negative electrode terminal having terminal height measuring portions respectively which differ in a surface shape, the method including: measuring a height of the terminal height measuring portion of the positive electrode terminal and a height of the terminal height measuring portion of the negative electrode terminal, and comparing the measured height of the positive electrode terminal and the measured height of the negative electrode terminal with a reference value.

With such a configuration, in measuring the difference in height between the positive electrode terminal and the negative electrode terminal, a significant difference in height, which is determinable, can be detected using the terminal height measuring portions having different surface shapes formed on the positive electrode terminal and the negative electrode terminal. Accordingly, it is possible to determine whether the electrode terminal being measured is the positive electrode terminal or the negative electrode terminal while determining an assembling error of the terminal with certainty.

Based on a measurement result of heights of the terminal height measuring portions, determining of an error in a height direction between the positive electrode terminals disposed adjacently to each other, determining of an error in the height direction between the negative electrode terminals disposed adjacently to each other, determining of an error in the height direction between the positive electrode terminal and the negative electrode terminal, and determining whether the electrode terminal is the positive electrode terminal or the negative electrode terminal may be performed at once.

With such a configuration, by making use of data on the terminal heights, it is possible to perform the determination on an assembling error and the determination on an arrangement error (erroneous arrangement) at once.

After the heights of the terminal height measuring portions are measured, the positive electrode terminals disposed adjacently may be connected to each other by a conductive member, the negative electrode terminals disposed adjacently may be connected to each other by a conductive member, or the positive electrode terminal and the negative electrode terminal may be connected to each other by a conductive member.

With such a configuration, the positive electrode terminal and the negative electrode terminal which are not covered by the conductive member can be measured and hence, a large number of measuring points can be set on a surface of the terminal whereby measurement accuracy can be enhanced. When a defect is detected in the arrangement of energy storage device by the measurement, the defect can be eliminated by adjusting the arrangement of the energy storage device. That is, when the measurement is performed after connecting the conductive member, a defect in the arrangement of the detected energy storage device cannot be eliminated and hence, the energy storage device apparatus which is a defective product cannot be shipped. On the other hand, with respect to the energy storage apparatus where the conductive member is not yet connected, a defect in arrangement of the energy storage device can be eliminated and hence, an occurrence rate of defective products can be largely reduced.

The measuring of heights of the terminal height measuring portions may be performed such that the height of the terminal height measuring portion of the positive electrode terminal and the height of the terminal height measuring portion of the negative electrode terminal are successively measured along an arrangement direction of the energy storage devices. The measuring of the heights of the terminal height measuring portions may be performed using a non-contact type measuring device.

According to another aspect of the present invention, there is provided An energy storage apparatus comprising a plurality of energy storage devices, each energy storage device having a positive electrode terminal and a negative electrode terminal wherein positive electrode terminals disposed adjacently are connected by a conductive member by welding, or wherein negative electrode terminals disposed adjacently are connected by the conductive member by welding, or wherein the positive electrode terminal and the negative electrode terminal are connected by the conductive member by welding, and the positive electrode terminals and the negative electrode terminals have terminal height measuring portions respectively which differ in a surface shape.

The terminal height measuring portion of the positive electrode terminal may have a projecting portion or a recessed portion.

The terminal height measuring portion of the negative electrode terminal may have a projecting portion or a recessed portion.

The positive electrode terminal or the negative electrode terminal may be formed of a terminal body portion and a shaft portion extending from the terminal body portion, and the projecting portion or the recessed portion may be formed on the terminal body portion.

With such a configuration, the projecting portion or the recessed portion of the terminal body portion can be simply formed by press working.

The terminal height measuring portion of the negative electrode terminal may have the projecting portion, and the projecting portion may be formed of a head portion of a terminal fastening member. For example, a rivet having a head portion is used as the terminal fastening member, and the head portion of the rivet is used as the projecting portion.

The energy storage device may include a conductive member connected to the positive electrode terminal or the negative electrode terminal, and a recessed portion may be formed on the conductive member at a position which corresponds to the projecting portion.

With such a configuration, positioning between the positive electrode terminal or the negative electrode terminal and the conductive member and welding between the positive electrode terminal or the negative electrode terminal and the conductive member can be easily performed.

According to yet another aspect of the present invention, there is provided an energy storage apparatus which includes a plurality of the above-mentioned energy storage devices.

The energy storage apparatus may include plural sets of energy storage devices where, in each one set of energy storages, the positive electrode terminals of the adjacent energy storage devices may be electrically connected in parallel by a connecting member and the negative electrode terminals of the adjacent energy storage devices may be electrically connected in parallel by a connecting member, and a positive electrode terminal group and a negative electrode terminal group of the plural sets of energy storage devices may be electrically connected in series by a continuous portion of the connecting member.

With such a configuration, it is possible to increase an output voltage of the entire energy storage apparatus formed of the energy storage devices connected in series and hence, a capacity (an electric amount) of the entire energy storage apparatus formed of the energy storage devices connected in parallel can be increased.

According to the aspects of the present invention, the terminal height measuring portions which differ in a surface shape are formed on the positive electrode terminal and the negative electrode terminal respectively. Accordingly, it is possible to determine the difference between the positive electrode terminal and the negative electrode terminal with certainty while determining an assembling error in the height direction of the arranged energy storage devices.

Hereinafter, an embodiment of the present invention is described with reference to attached drawings. In the description made hereinafter, terms for indicating specific directions and positions (for example, terms which contain "upper", "lower", "side" and "end") are used when necessary. However, these terms are used for facilitating understanding of the invention with reference to drawings, and the technical scope of the present invention is not limited by meanings of these terms. The description made hereinafter merely shows an example, and does not intend to limit the present invention, products to which the present invention is applied, or its applications. Further, drawings are schematically shown and hence, ratios of respective sizes and the like may differ from actual ratios of sizes and the like.

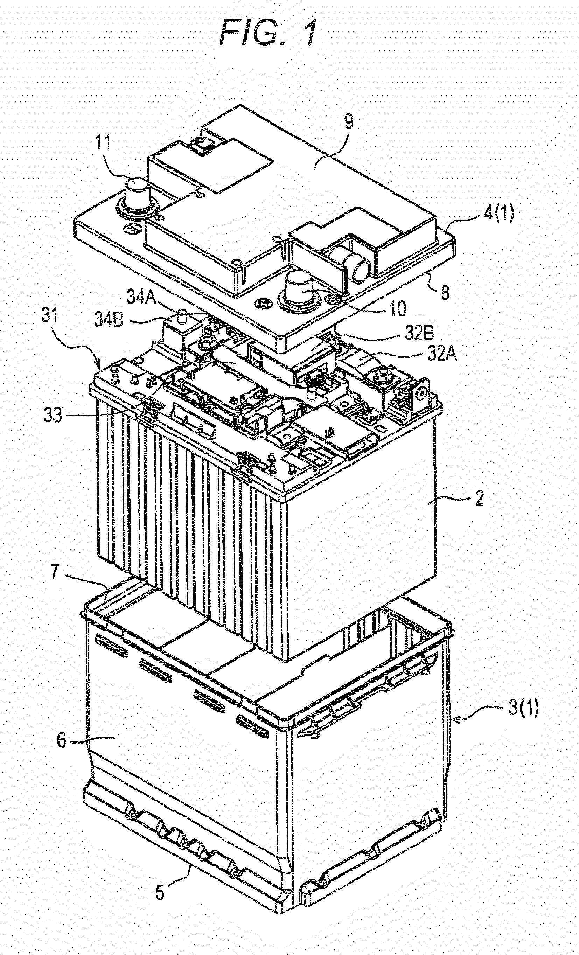

FIG. 1 shows an energy storage apparatus according to this embodiment. The energy storage device includes an outer case 1, and a plurality of energy storage devices 2 accommodated in the inside of the outer case 1.

The outer case 1 includes a body 3 and a lid body 4 which are made of a synthetic resin material.

The body 3 has a bottomed cylindrical shape. The body 3 includes: a bottom surface portion 5 having a rectangular shape as viewed in a plan view; and four side surface portions 6 which are raised from four sides of the bottom surface portion 5 thus forming a cylindrical shape. An upwardly opening portion 7 is formed on an upper end portion of the body 3 formed by the four side surface portions 6.

The lid body 4 has a rectangular shape as viewed in a plan view, and a frame 8 extends downward from four sides of the lid body 4. The lid body 4 closes the upwardly opening portion 7 of the body 3. A projecting portion 9 having an approximately T shape as viewed in a plan view is formed on an upper surface of the lid body 4. On the upper surface of the lid body 4, there are two corner portions where the projecting portion 9 is not formed, and a positive electrode external terminal 10 is fixed to one corner portion, and a negative electrode external terminal 11 is fixed to the other corner portion.

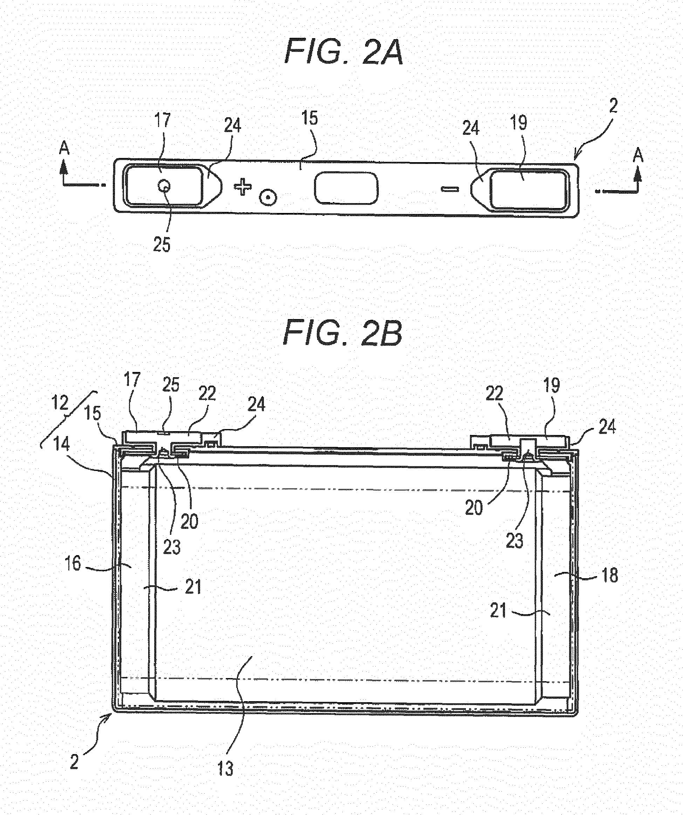

As shown in FIG. 2A and FIG. 2B, the energy storage device 2 is configured such that an electrode assembly 13 is accommodated in the inside of a rectangular parallelepiped case 12 together with a non-aqueous electrolyte. The case 12 includes a case body 14, and a cover 15 which closes an opening portion disposed on an upper side of the case body 14.

Although not shown in the drawing in detail, the electrode assembly 13 is configured such that a separator made of a porous resin film is disposed between a negative electrode element formed by applying an active material to a base material made of a copper foil and a positive electrode element formed by applying an active material to a base material made of an aluminum foil. All these elements may have a strip shape, and may be wound together in a flat shape such that the elements can be accommodated in the case body 14 in a state where the negative electrode element and the positive electrode element are positionally displaced in a width direction with respect to the separator.

A positive electrode terminal 17 is connected to the positive electrode element by way of a positive electrode current collector 16, and a negative electrode terminal 19 is connected to the negative electrode element by way of a negative electrode current collector 18. The positive electrode current collector 16 and the negative electrode current collector 18 are each formed of a flat-plate-like pedestal portion 20, and a leg portion 21 which extends from the pedestal portion 20. A through hole is formed in the pedestal portion 20. The leg portion 21 is connected to the positive electrode element or the negative electrode element. The positive electrode terminal 17 and the negative electrode terminal 19 are each formed of a terminal body portion 22, and a shaft portion 23 which projects downward from a center portion of a lower surface of the terminal body portion 22. In such a configuration, the terminal body portion 22 and the shaft portion 23 of the positive electrode terminal 17 may be formed as an integral body made of aluminum (single material). In the negative electrode terminal 19, the terminal body portion 22 may be made of aluminum, and the shaft portion 23 may be made of copper. The negative electrode terminal 19 may be formed by assembling the aluminum-made terminal body portion 22 and the copper-made shaft portion 23. The terminal body portion 22 of the positive electrode terminal 17 and the terminal body portion 22 of the negative electrode terminal 19 are disposed on both end portions of the cover 15 via gaskets 24 made of an insulating material, and are exposed to the outside from the gaskets 24.

A recessed portion 25 which forms a part of a terminal height measuring portion is formed on a center portion of at least either one of the terminal body portion 22 of the positive electrode terminal 17 or the terminal body portion 22 of the negative electrode terminal 19. In this embodiment, the recessed portion 25 is formed on an upper surface of the terminal body portion 22 of the positive electrode terminal 17, and the recessed potion 25 is not formed on an upper surface of the terminal body portion 22 of the negative electrode terminal 19. As described later, not only the recessed portion but also a terminal surface 35 of the positive electrode terminal 17 or the negative electrode terminal 19 are measured. Accordingly, the terminal height measuring portion includes not only the recessed portion 25 but also the terminal surface 35. That is, due to the formation of the recessed portion 25 (or due to not forming the recessed portion 25), the terminal height measuring portions which differ from each other in shape of the terminal surface 35 are formed on the terminal surface 35 of the positive electrode terminal 17 and the terminal surface 35 of the negative electrode terminal 19.

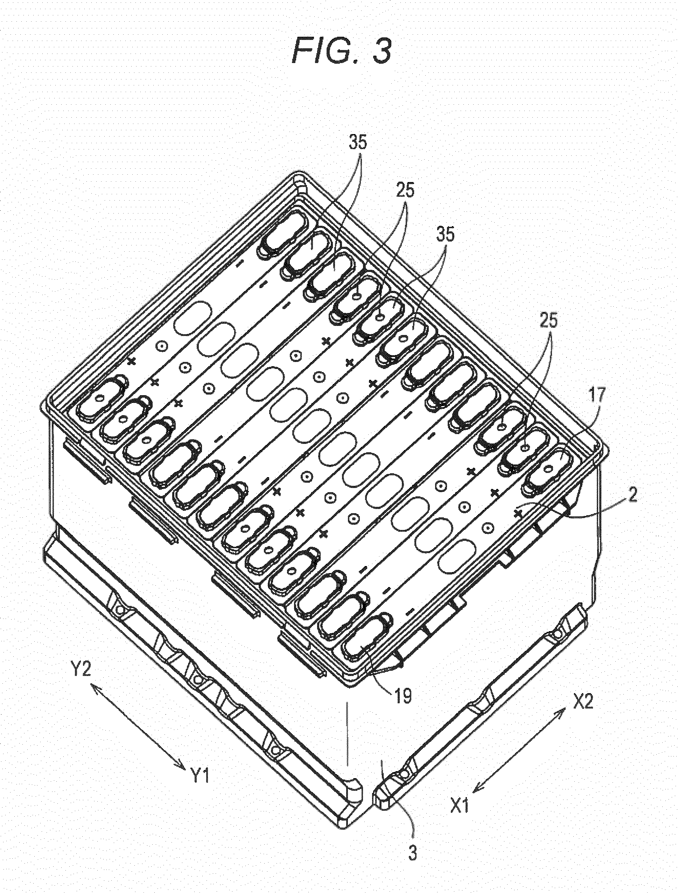

As shown in FIG. 3, the energy storage devices 2 each having the above-mentioned configuration are accommodated in the inside of the body 3 in a state where the plurality of (for example, twelve) energy storage devices 2 are arranged in a thickness direction. In this embodiment, the energy storage devices 2 are disposed such that three energy storage devices 2 arranged from one end toward the other end (in a direction along an arrow Y1 and an arrow Y2) of the body 3 form one set. In the same set, the adjacent energy storage devices 2, 2 are arranged such that the energy storage devices 2, 2 have the same terminal polarity. Over the different sets disposed adjacently, the adjacent energy storage devices 2, 2 are arranged such that the energy storage devices 2, 2 have different polarities. In the three energy storage devices 2 (first set) which are positioned on an arrow Y 1 side, a negative electrode is disposed on an arrow X1 side, and a positive electrode is disposed on an arrow X2 side. In the next three energy storage devices 2 (second set), a positive electrode is disposed on the arrow X1 side, and a negative electrode is disposed on the arrow X2 side. A third set disposed adjacently to the second set has the same arrangement as the first set, and the fourth set disposed adjacently to the third set has the same arrangement as the second set.

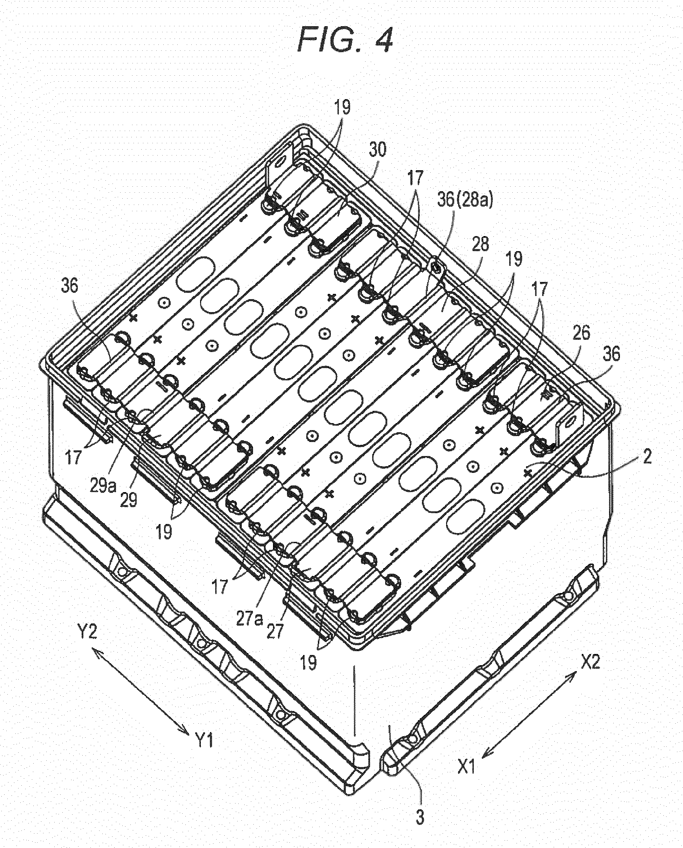

As shown in FIG. 4, terminal bus bars (connecting members) 26 to 30 as conductive members are connected to the positive electrode terminals 17 and the negative electrode terminals 19 by welding. On the arrow X2 side of the first set, the positive electrode terminals 17 belonging to the group of positive electrode terminals 17 are connected to each other by a first bus bar 26. Between the first set and the second set, the group of negative electrode terminals 19 of the first set and the group of positive electrode terminals 17 of the second set are connected to each other by a second bus bar 27 on the arrow X1 side. Between the second set and the third set, the group of negative electrode terminals 19 of the second set and the group of positive electrode terminals 17 of the third set are connected to each other by a third bus bar 28 on the arrow X2 side. Between the third set and the fourth set, the group of negative electrode terminals 19 of the third set and the group of positive electrode terminals 17 of the fourth set are connected to each other by a fourth bus bar 29 on the arrow X1 side. On the arrow X2 side of the fourth set, the group of negative electrode terminals 19 are connected to each other by a fifth bus bar 30.

To describe the above-mentioned configuration also with reference to FIG. 1, the first bus bar 26 positioned at one end on the flow of electricity is connected to the positive electrode external terminal 10 via a first electronic equipment 32A (for example, a fuse), a second electronic equipment 32B (for example, a relay), a bus bar 33, and a bus bar terminal (not shown in the drawing). The fifth bus bar 30 which is positioned at the other end of the flow of electricity is connected to the negative electrode external terminal 11 via the bus bars 34A, 34B, and a negative electrode bus bar terminal (not shown in the drawing). With such a configuration, each of the energy storage devices 2 can perform charging and discharging of electricity via the positive electrode external terminal 10 and the negative electrode external terminal 11. The electronic equipment 32A, 32B and electric part connecting bus bars 33 to 34B are mounted on a printed circuit board unit 31 which is disposed above the plurality of energy storage devices 2 which are arranged in a stacked manner. The bus bar terminal is disposed on the lid body 4.

The arrangement state of the plurality of energy storage devices 2, which are to be electrically connected to each other by the terminal bus bars 26 to 30, is checked in the following manner.

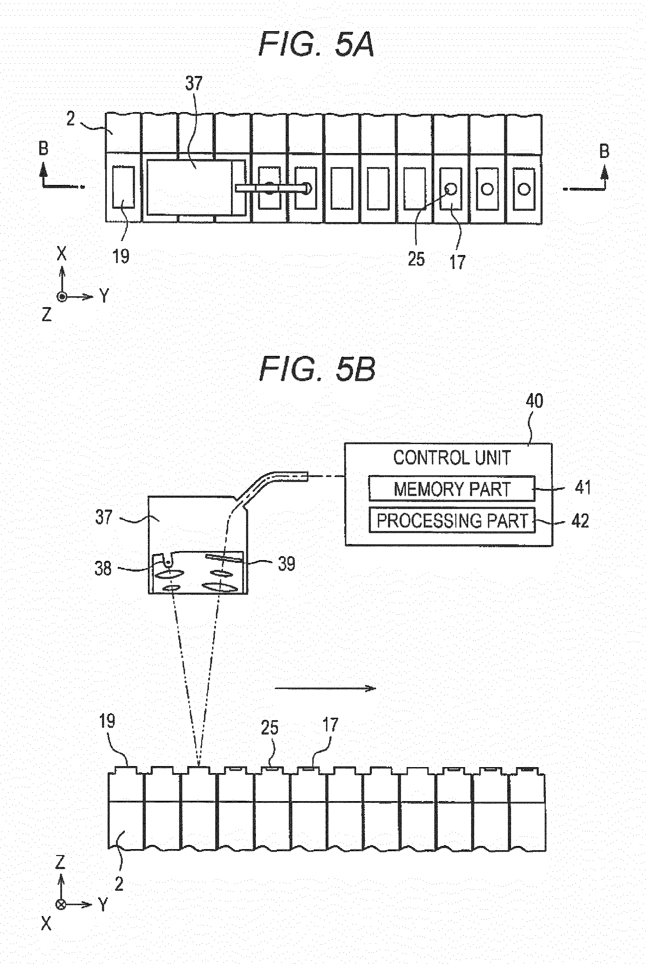

As shown in FIG. 3, all energy storage devices 2 are accommodated in the inside of the body 3, that is, the energy storage devices 2 are arranged in one direction. Then, as shown in FIG. 5A and FIG. 5B, the detection is made whether or not the directions of the respective energy storage devices 2 are correct. Also the detection is made whether or not the positive electrode terminals 17 and the negative electrode terminals 19 of the energy storage devices 2 are positionally displaced in a height direction (a Z direction orthogonal to both an X direction indicated by an arrow X1-X2 and a Y direction indicated by an arrow Y1-Y2). These detections are made by an optical measuring device 37,

The optical measuring device 37 may be an optical measuring device where a laser beam is irradiated from a light emitting part 38, and a reflection light on the positive electrode terminal 17 or the negative electrode terminal 19 is received by a light receiving part 39 so that a distance from the light emitting part 38 to the positive electrode terminal 17 or the negative electrode terminal 19 is measured. As a method of measuring a distance, it is possible to adopt a diffusion reflection method (a method where a diffused reflection light is received out of an irradiated laser beam), a specular reflection method (a method where a light projection angle and a light reception angle are inclined, and a specular reflection component of a reflection light is received) or the like. A measuring device is not limited to an optical measuring device, and other non-contact sensors such as a linear proximity sensor or an ultrasonic sensor can also be used. In addition, a contact sensor such as a touch probe or a contact height measuring equipment such as a height gauge or a dial indicator can also be used.

In the measurement performed using the optical measuring device 37, the measurement is successively performed while moving the optical measuring device 37 in the Y direction which is the arrangement direction of the energy storage device 2. A detection signal from the optical measuring device 37 is inputted to a control unit 40. The control unit 40 includes a memory part 41 and a processing part 42.

A control program and various data are stored in the memory part 41. The control program contains a content concerning the manner of moving the optical measuring device 37 with respect to the energy storage apparatus set at a predetermined position, and a content concerning the manner of processing acquired detection values. In various data to be stored, distance data relating to distances from the light emitting part 38 to the terminals 17, 19 which are objects to be measured is contained. In the distance data, an allowable step range Rt, a first reference value V1, a second reference value V2, a third reference value V3 and a fourth reference value V4 are contained.

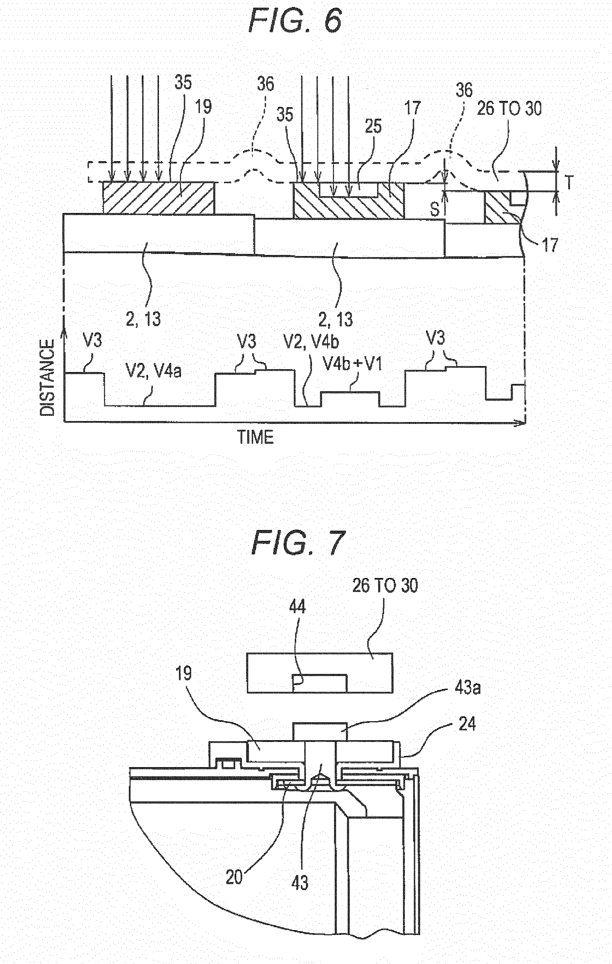

The allowable step range Rt is provided for determining whether or not the difference in height between the energy storage devices 2, 2 disposed adjacently to each other falls within a range where the terminal bus bars 26 to 30 can be joined to the terminals 17, 19 with a proper strength. To be more specific, as shown in FIG. 3, the heights of the terminals 17, 19 in a state where the energy storage devices 2 are arranged in the body 3 may become irregular due to an error in parts of the energy storage device 2 per se and an error in assembling the energy storage device 2 to the body 3 as shown in FIG. 6. When a step S between upper surfaces of the terminals 17, 17 disposed adjacently, a step S between upper surfaces of the terminals 17, 19 disposed adjacently, or a step S between upper surfaces of the terminals 19, 19 disposed adjacently is 10% or more of a thickness T of the terminal bus bar 26, 27, 28, 29, 30 (for example, 2mm, that is, the step S is 0.2 mm or more, for example), a connecting strength of the terminal bus bars 26 to 30 to the terminals 17, 19 is lowered. Accordingly, it is necessary to set the terminal step S between the energy storage devices 2, 2 disposed adjacently, which contains an error in parts and an assembling error, to a value less than 10% of the thickness T of the terminal bus bar 26, 27, 28, 29, 30. The allowable step range Rt is set so as to eliminate the energy storage apparatus where the terminals are arranged with a large step which lowers a connecting strength.

The first reference value V1 is set for determining whether the terminal is the positive electrode terminal 17 or the negative electrode terminal 19. The first reference value V1 is a numerical value corresponding to a depth of the recessed portion 25, and is set to a numerical value larger than 10% of the thickness T of the terminal bus bar 26, 27, 28, 29, 30 (for example, 1.0 mm) such that the first reference value V1 sufficiently exceeds the allowable step range Rt. That is, the difference in height between the positive electrode terminal 17 and the negative electrode terminal 19 at measuring positions is set larger than 10% of the thickness T of the terminal bus bar 26, 27, 28, 29, 30 thus producing a significant difference for determining the presence or non-presence of the recessed portion 25.

The second reference value V2 is set for determining whether a detecting portion is the terminal 17, 19. The second reference value V2 is a range obtained by adding an allowable error Ra to a distance from the optical measuring device 37 to the negative electrode terminal 19 (equal to a distance from the optical measuring device 37 to a portion of the positive electrode terminal 17 where the recessed portion 25 is not formed). The allowable error Ra is an allowable range of positional displacement of the single energy storage device 2 with respect to the body 3 in the height direction Z (for example, ±0.2 mm). For example, in the case where the energy storage device 2 is arranged in the body 3 as designed, when a distance (designed value) from the optical measuring device 37 to the terminal 17, 19 is 100 mm, a range obtained by adding the allowable error Ra to such a value (99.8 mm to 100.2 mm) is set as the second reference value V2.

The third reference value V3 is set for determining whether or not a detecting portion is the cover 15. The third reference value V3 is a range obtained by adding an allowable error Ra to a distance from the optical measuring device 37 to the cover 15. For example, in the case where the energy storage device 2 is arranged in the body 3 as designed, when a distance (designed value) from the optical measuring device 37 to the cover 15 is 105 mm, a range obtained by adding the allowable error Ra to such a value (104.8 mm to 105.2 mm) is set as the third reference value V3.

The fourth reference value V4 is an actually measured value obtained by firstly measuring a specified terminal 17 or 19. The fourth reference value V4 is stored for individual energy storage devices 2.

The stored various data includes arrangement data indicating the arrangement directions of the respective energy storage devices 2 in the energy storage apparatus (specifying the center positions of the positive electrode terminal 17 and the negative electrode terminal 19 in coordinates having an origin and indicating which center positions the positive electrode terminal 17 and the negative electrode terminal 19 are positioned).

The processing part 42 moves the optical measuring device 37 along the Y direction which is the arrangement direction of the energy storage devices 2 with reference to arrangement data in accordance with the control program. Upon reception of a laser beam emitted from the light emitting part 38 by the light receiving part 39, a distance from the optical measuring device 37 to the positive electrode terminals 17 or the negative electrode terminals 19 of the respective energy storage devices 2 are sequentially detected, and detection values are analyzed by the processing part 42.

To be more specific, the processing part 42 determines whether the portion of the terminal 17, 19 or the portion of the cover 15 is measured by comparing a detection value obtained by the optical measuring device 37 with the second reference value V2 and the third reference value V3. Further, the processing part 42 determines whether or not the recessed portion 25 is formed on the terminal 17, 19 which is the measuring object, that is, whether the terminal is the positive electrode terminal 17 or the negative electrode terminal 19 by comparing the detection value with the fourth reference value V4 and the first reference value V1. Further, the processing part 42 determines whether the terminal step S between the energy storage devices 2, 2 disposed adjacently is normal or abnormal by calculating the difference between the previously detected fourth reference value V4a of the terminal 17, 19 and the currently detecting fourth reference value V4b of the terminal 17, 19 and by comparing the difference with the allowable step range Rt. Further, the processing part 42 determines that the position of the energy storage device 2 is largely displaced in the height direction Z when the detection value is smaller than a lower limit of the second reference value V2, and determines that the energy storage device 2 is set when the detection value is larger than an upper limit of the third reference value V3.

Next, the arrangement check of energy storage devices 2 is described in accordance with a time chart shown in FIG. 6. In FIG. 6, to simplify the description, the arrangement of the energy storage devices 2 is made different from those in FIG. 3 and FIG. 5.

As shown in FIG. 6, distance signals measured while moving the optical measuring device 37 in the Y direction are constantly inputted to the processing part 42 as detection values. When the detection value corresponds to neither the second reference value V2 nor the third reference value V3, the processing part 42 determines that the energy storage device 2 is not set or the position of the energy storage device 2 is largely displaced in the height direction Z, and notifies accordingly. When the detection value corresponds to the third reference value V3, the processing part 42 determines that the portion of the cover 15 is measured.

When the detection value shifts from a state where the detection value corresponds to the third reference value V3 to a state where the detection value corresponds to the second reference value V2, the processing part 42 determines that the laser beam reaches the positive electrode terminal 17 or the negative electrode terminal 19 of the first energy storage device 2, and stores the first detection value (for example, 99.9 mm) as the fourth reference value V4a. After storing the fourth reference value V4a, until the detection value returns to a state where the detection value corresponds to the third reference value V3, the processing part 42 performs determination using the fourth reference value V4a as a comparison target value. When the detection is successively performed thereafter, in the example shown in FIG. 6, a state where the detection value is substantially equal to the fourth reference value V4a continues and, thereafter, the detection value is shifted to a state where the detection value corresponds to the third reference value V3. Accordingly, the processing part 42 determines that the terminal of the firstly detected energy storage device 2 is the negative electrode terminal 19 on which the recessed portion 25 is not formed. Then, the processing part 42 compares this determination with arrangement data, and when the determination that the terminal is the negative electrode terminal 19 is not correct, the processing part 42 determines that the direction of the energy storage device 2 is wrong, and notifies accordingly.

When the detection is successively performed thereafter, the detection value shifts again from a state where the detection value corresponds to the third reference value V3 to a state where the detection value corresponds to the second reference value V2. As a result, the processing part 42 determines that the laser beam reaches the positive electrode terminal 17 or the negative electrode terminal 19 of the second energy storage device 2, and stores the first detection value (for example, 100 mm) as the fourth reference value V4b. When the detection is continued thereafter, in the example shown in FIG. 6, a state where the detection value is substantially equal to the fourth reference value V4b continues and, thereafter, the detection value becomes a value obtained by adding the first reference value V1 to the fourth reference value V4b. Thereafter, a state where detection value is the value obtained by adding the first reference value V1 to the fourth reference value V4b is continued for a while and, thereafter, the reference value returns to the fourth reference value V4b. A state where the detection value is the fourth reference value V4b continues for a while and, thereafter, the detection value is shifted to a state where the reference value corresponds to the third reference value V3. Accordingly, the processing part 42 determines that the terminal of the secondly detected energy storage device 2 is the positive electrode terminal 17 on which the recessed portion 25 is formed. Then, the processing part 42 compares this determination with arrangement data, and when the determination that the terminal is the positive electrode terminal 17 is not correct, the processing part 42 determines that the direction of the energy storage device 2 is wrong, and notifies accordingly.

When the direction of the energy storage device 2 is correct, the processing part 42 calculates the difference between the fourth reference value V4a of the first energy storage device 2 and the fourth reference value V4b of the second energy storage device 2. When the calculated value (terminal step S) falls within the allowable step range Rt, the processing part 42 determines that the positional displacement of the energy storage device 2 in the height direction Z falls within the allowable range. When the terminal step S does not fall within the allowable step range Rt, the processing part 42 determines that the positional displacement of the energy storage device 2 in the height direction Z is large, and notifies accordingly.

The third energy storage device 2 and succeeding energy storage devices 2 are checked in the same manner as the second energy storage device 2. The determination whether or not the terminal step S falls within the allowable step range Rt is performed based on only a comparison with one-stage preceding energy storage device 2. Alternatively, the energy storage device 2 may be compared with a predetermined number of energy storage devices 2 disposed upstream of the energy storage device.

In this manner, by detecting the heights of the respective terminals of the energy storage devices 2 by the optical measuring device 37, it is possible to automatically detect whether or not the respective energy storage devices 2 are accommodated in the body 3 in a state where polarities of the respective energy storage devices 2 are directed in the correct direction and whether or not the respective energy storage devices 2 are positionally displaced in the height direction Z based on the measurement result.

If there is no problem after completion of the detection of heights of the respective terminals of the energy storage devices 2 by the optical measuring device 37, the terminal bus bars 26 to 30 are welded to the respective terminals 17, 19. A printed circuit board, a bus bar terminal and the like are mounted on the energy storage devices 2 and, thereafter, such an assembly is covered by the printed circuit board unit 31 and the lid body 4 so that the energy storage apparatus is completed.

As has been described heretofore, according to this embodiment, an assembling error of adjacent terminals in the height direction can be determined by determining whether the terminal step S between the energy storage devices 2, 2 disposed adjacently is normal or abnormal based on the allowable step range Rt by making use of data on the heights of the terminals. Further, whether the terminal is the positive electrode terminal 17 or the negative electrode terminal 19 is determined and hence, arrangement error (erroneous arrangement) of the energy storage devices 2 can be determined at once.

The arrangement check of the energy storage device 2 is performed before the positive electrode terminals 17 are connected to each other by the bus bar 26, 27, 28, 29, 30, the negative electrode terminals 19 are connected to each other by the bus bar 26, 27, 28, 29, 30 or the positive electrode terminal 17 and the negative electrode terminal 19 are connected to each other by the bus bar 26, 27, 28, 29, 30. In the arrangement check of the energy storage device 2, the positive electrode terminal 17 and negative electrode terminal 19 which are not covered by the bus bar 26, 27, 28, 29, 30 are measured and hence, many measuring points can be set on the terminal surface 35. Accordingly, the measurement accuracy of the energy storage devices 2 relating to the arrangement check can be enhanced.

When a defect is detected in the arrangement of energy storage devices 2 by the measurement, the defect can be eliminated by adjusting the arrangement of the energy storage device 2. That is, when the measurement is performed after connecting the bus bars 26 to 30, a defect in arrangement of the detected energy storage device 2 cannot be eliminated and hence, the energy storage device apparatus which is a defective product cannot be shipped. On the other hand, in this embodiment, a defect detected in arrangement of the energy storage device 2 can be eliminated and hence, an occurrence rate of defective products can be largely reduced.

In this embodiment, an assembling error of the adjacent terminals in a height direction is determined and a set of energy storage devices 2 which do not fall within an allowable step range Rt is eliminated and hence, the bus bars 26 to 30 can be connected to the terminals having a small step S (gap). With respect to the set of energy storage devices 2 which is eliminated from the original manufacturing steps, portions having the large step S are corrected and, thereafter, the set of energy storage devices 2 are returned to the manufacturing steps again. Accordingly, the possibility that a defective set of energy storage devices 2 where an assembling error in a height direction exists in the adjacent terminals is found after welding can be reduced.

A method of welding the bus bar 26, 27, 28, 29, 30 to the terminal surfaces 35 is specifically described. Firstly, the bus bar 26, 27, 28, 29, 30 is disposed over terminal surfaces 35 of the terminals to be electrically connected and disposed adjacently in a straddling manner. Thereafter, the bus bar 26, 27, 28, 29, 30 is pressed to the terminal surfaces 35 by pushing portions of the terminal surfaces 35 other than welding regions of the bus bar 26, 27, 28, 29, 30. With such a configuration, a gap formed between the bus bar 26, 27, 28, 29, 30 and the terminal surface 35 can be made as small as possible. When the gap formed between the bus bar 26, 27, 28, 29, 30 and the terminal surface 35 becomes small, welding between the bus bar 26, 27, 28, 29, 30 and the terminal surface 35 can be performed favorably.

When the step S is so large that the gap cannot be absorbed even when the bus bars 26 to 30 are pressed to the terminal surface 35, the gap is being held as it is between the bus bar 26, 27, 28, 39, 30 and the terminal surface 35. When welding is performed in such a state, irregularities occur in a molten state of a welded part so that a connecting state such as a welding strength becomes unstable whereby causing a welding defect.

As shown in FIG. 4 and FIG. 6, the bus bar 26, 27, 28, 29, 30 according to this embodiment has a partially-bent bent portion (hinge portion) 36 between regions thereof which oppositely faces the terminal surface 35. By allowing the deformation of the bent portion 36, a surface of the bus bar 26, 27, 28, 29, 30 which oppositely faces the terminal surface 35 can be vertically displaced. Accordingly, by pressing the bus bar 26, 27, 28, 29, 30 to the terminal surface 35 thus deforming the bent portion 36, a gap formed between the bus bar 26, 27, 28, 29, 30 and the terminal surface 35 caused by an assembling error of the energy storage device 2 can be absorbed within a predetermined range. Further, even after the energy storage apparatus is completed by connecting the bus bar 26, 27, 28, 29, 30 to the terminal surface 35, the bent portion 36 can absorb displacement of the terminal surface 35 of the energy storage device 2 caused by vibration of the energy storage apparatus can be absorbed within a predetermined range.

As has been described heretofore, according to this embodiment, before the bus bar 26, 27, 28, 29, 30 is welded to the terminal surface 35, an assembling error of the adjacent terminals in a height direction is measured, and the presence or non-presence of a defect relating to the step S of the set of the energy storage devices 2 is determined. Further, the set of the energy storage devices 2 in which a defect is detected is temporarily eliminated from the original manufacture steps and is shifted to a step where the step S is corrected. Then, after the step S is corrected to an allowable range, the energy storage devices 2 are returned to the original manufacture steps, and the measurement of the terminals is performed again so as to confirm the arrangement and the step S. Thereafter, when the arrangement and the step S are correct, the bus bar 26, 27, 28, 29, 30 is arranged on the terminal surface 35, is pressed to the terminal surface 35 and is welded to the terminal surface 35.

Accordingly, at the time of welding the bus bar 26, 27, 28, 29, 30 to the terminal surface 35, the set of energy storage devices 2 where the step S which cannot be absorbed by the bent portion 6 does not exist. As a result, the occurrence of a defective product where a large gap exists between the bus bar 26, 27, 28, 29, 30 and the terminal surface 35 can be prevented in advance thus lowering an occurrence rate of a defective product.

The energy storage apparatus according to this embodiment includes sets of energy storage devices 2 in each of which the positive electrode terminals 17 of the energy storage devices 2 are electrically connected to each other by the bus bar 26, 27, 28, 29, 30 and the negative electrode terminals 19 of the energy storage devices 2 are electrically connected to each other by the bus bar 26, 27, 28, 29, 30. The group of positive electrode terminals 17 and the group of negative electrode terminals 19 are electrically connected in series by the connecting portions 27a to 29a of the bus bars 27 to 29. This connection method is adopted for designing the energy storage apparatus for the purpose of increasing an output voltage of the entire energy storage apparatus by the energy storage devices 2 connected in series, and for the purpose of increasing a capacity (electric amount) of the entire energy storage apparatus by the energy storage devices 2 connected in parallel.

In this connection method, regardless of connection in series or connection in parallel, the number of energy storage devices 2 connected by one bus bar 26, 27, 28, 29, 30 is 3, 4 or more. Accordingly, compared to the case where two energy storage devices 2 disposed adjacently are simply connected in series, the number of energy storage devices 2 to be connected by one bus bar is large.

When a large number of energy storage devices 2 are connected to one bus bar, the technical significance of this embodiment is large. That is, when the number of energy storage devices 2 connected in mixture of serial connection and parallel connection is 3 or more, there may arise a state where the energy storage device 2 positioned at a middle portion projects or is recessed than energy storage devices 2, 2 disposed on both sides of the energy storage device 2 positioned at the middle portion. In this case, a set of energy storage devices 2 having an assembling error is eliminated from the original manufacture steps, a portion having large step S is corrected and, thereafter, the energy storage devices are returned again to the original manufacture steps. In this manner, because a defect can be detected before the bus bar 26, 27, 28, 29, 30 is welded to the terminal, it is possible to provide an opportunity where the terminals disposed adjacently can be corrected in a height direction.

The present invention is not limited to the configurations described in the embodiment, and various modifications are conceivable.

In the above-mentioned embodiment, as the arrangement of energy storage devices 2 accommodated in the inside of the body 3, the example shown in FIG. 3 is exemplified. However, various arrangements can be adopted depending on the difference in kinds of energy storage apparatuses or the like so that the present invention is not limited to such an example. In any arrangement, by setting the information on the arrangement in advance, the direction of the energy storage device 2 and the positional displacement of the energy storage device 2 in a height direction can be detected by the above-mentioned optical measuring device 37 with certainty.

In the above-mentioned embodiment, the recessed portion 25 is formed on the center portion of the upper surface of the positive electrode terminal 17. However, the recessed portion 25 may be formed on the negative electrode terminal 19. Further, a projecting portion may be formed in place of the recessed portion 25 or the combination of the recessed portion 25 and the projecting portion may be used. In any cases, it is sufficient that a significant difference which can be detected by the optical measuring device 37 be formed between the projecting portion and the terminal body portion 22 or between the recessed portion 25 and the projecting portion.

When the projecting portion is formed on the negative electrode terminal 19, the projecting portion may be formed of a head portion of a terminal fastening member. For example, as shown in FIG. 7, a rivet 43 having a head portion 43a is used as the terminal fastening member, and the head portion 43a of the rivet 43 can be used as the projecting portion of the negative electrode terminal 19.

When the projecting portion 43a is formed on the negative electrode terminal 19 or the positive electrode terminal 17, a recessed portion 44 may be formed at a corresponding position of the terminal bus bar 26, 27, 28, 29, 30, and the terminal bus bar 26, 27, 28, 29, 30 may be positioned with respect to the projecting portion 43a using the recessed portion 44 and, thereafter, the projecting portion 43a may be welded. With such a configuration, the projecting portion 43a is positioned and temporarily fixed in the recessed portion 44 in advance and, thereafter, the respective terminals 17, 19 and the terminal bus bars 26 to 30 can be welded to each other and hence, operability is enhanced.

Although the description has been made by taking the energy storage apparatus where the energy storage devices 2 are accommodated in the inside of the outer case 1 as an example, the energy storage apparatus which does not include the outer case 1 may be used.

Various modifications are also considered with respect to the method of manufacturing an energy storage apparatus (arrangement detection method).

In this embodiment, a measuring portion of the energy storage device 2 is determined by setting the second reference value V2 and the third reference value V3. However, the determination method can be changed as desired. For example, only the second reference value V2 used for determining whether a measuring portion is the terminal 17 or 19 may be set without setting the third reference value V3 for determining whether or not a measuring portion is the cover 15. Then, when a detection value does not correspond to the second reference value V2, it is reasonable to determine that the cover 15 is measured. Alternatively, only the third reference value V3 may be set without setting the second reference value V2. When a detection value does not correspond to the third reference value V3, it is reasonable to determine that the terminals 17, 19 are measured.

The third reference value V3 may be a design value of a step between the cover 15 and the terminal 17, 19 (for example, 5mm). Whether a measuring portion is the cover 15 or not may be determined by adding the third reference value V3 to the second reference value V2. Alternatively, the second reference value V2 may be the design value of a step between the cover 15 and the terminal 17, 19 (for example, 5mm). Whether or not a measuring portion is the terminal 17, 19 may be determined by subtracting the second reference value V2 from the third reference value V3. Alternatively, only a reference value V corresponding to the step between the cover 15 and the terminal 17, 19 may be set. It may be determined that the cover 15 is measured when a detection value is increased by an amount of the reference value V, and it may be determined that the terminal 17, 19 is measured when the detection value is decreased by an amount of the reference value V.

The position or part at which the fourth reference value V4 is detected and stored can be changed as desired. For example, a detection value of a specified position set in the Y direction where the terminal 17, 19 is positioned may be stored as the fourth reference value V4. Alternatively, an average value of a plurality of detection values obtained by detecting the terminal 17, 19 may be stored as the fourth reference value V4.

The second reference value V2 and the third reference value V3 may not be a predetermined range and may be specified numerical values. That is, a reference value of a height of the terminal 17, 19 may be set constantly or in advance. Whether the terminal is the positive electrode terminal 17 or the negative electrode terminal 19 may be determined based on the reference value, a reference value V1 of the recessed portion 25 and the acquired detection value.

## Claims

1. A method of manufacturing an energy storage apparatus which includes a plurality of energy storage devices (2) each provided with a positive electrode terminal (17) and a negative electrode terminal (19) having terminal height measuring portions respectively which differ in a surface shape, the method comprising:
measuring a height of the terminal height measuring portion of the positive electrode terminal (17) and a height of the terminal height measuring portion of the negative electrode terminal (19); and
comparing the measured height of the positive electrode terminal (17) and the measured height of the negative electrode terminal (19) with a reference value.

2. The method of manufacturing an energy storage apparatus according to claim 1, wherein
based on a measurement result of heights of the terminal height measuring portions,
determining of an error in a height direction between the positive electrode terminals (17) disposed adjacently to each other, determining of an error in the height direction between the negative electrode terminals (19) disposed adjacently to each other, determining of an error in the height direction between the positive electrode terminal (17) and the negative electrode terminal (19), and determining whether the electrode terminal is the positive electrode terminal (17) or the negative electrode terminal (17) are performed at once.

3. The method of manufacturing an energy storage apparatus according to claim 1 or 2, wherein after the heights of the terminal height measuring portions are measured,
the positive electrode terminals (17) disposed adjacently are connected to each other by a conductive member, the negative electrode terminals (19) disposed adjacently are connected to each other by a conductive member, or the positive electrode terminal (17) and the negative electrode terminal (19) are connected to each other by a conductive member.

4. The method of manufacturing an energy storage apparatus according to any one of claims 1 to 3, wherein the measuring of heights of the terminal height measuring portions is performed such that the height of the terminal height measuring portion of the positive electrode terminal (17) and the height of the terminal height measuring portion of the negative electrode terminal (19) are successively measured along an arrangement direction of the energy storage devices (2).

5. The method of manufacturing an energy storage apparatus according to any one of claims 1 to 4, wherein the measuring of the heights of the terminal height measuring portions is performed using a non-contact type measuring device (37).

6. An energy storage apparatus comprising:
a plurality of energy storage devices (2), each energy storage device (2) having a positive electrode terminal (17) and a negative electrode terminal (19),
wherein positive electrode terminals (17) disposed adjacently are connected by a conductive member (26, 27, 28, 29, 30) by welding, or
wherein negative electrode terminals (19) disposed adjacently are connected by the conductive member (26, 27, 28, 29, 30) by welding, or
wherein the positive electrode terminal (17) and the negative electrode terminal (19) are connected by the conductive member (26, 27, 28, 29, 30) by welding, and
the positive electrode terminals (17) and the negative electrode terminals (19) have terminal height measuring portions respectively which differ in a surface shape.

7. The energy storage apparatus according to claim 6, wherein the terminal height measuring portion of the positive electrode terminal (17) has a projecting portion or a recessed portion (25).

8. The energy storage apparatus according to claim 6 or 7, wherein the terminal height measuring portion of the negative electrode terminal (19) has a projecting portion or a recessed portion (25).

9. The energy storage apparatus according to claim 7 or 8, wherein the positive electrode terminal (17) or the negative electrode terminal (19) is formed of a terminal body portion (22) and a shaft portion (23) extending from the terminal body portion (22), and
the projecting portion or the recessed portion (25) is formed on the terminal body portion (22).

10. Theenergy storage apparatus according to claim 8, wherein the terminal height measuring portion of the negative electrode terminal (19) has the projecting portion, and
the projecting portion (43a) is formed of a head portion (43a) of a terminal fastening member.

11. The energy storage apparatus according to any one of claims 7 to 10, further comprising a conductive member connected to the positive electrode terminal (17) or the negative electrode terminal (19), and
a recessed portion (25) is formed on the conductive member at a position which corresponds to the projecting portion.

12. The energy storage apparatus according to claim 6, wherein the energy storage apparatus includes plural sets of energy storage devices (2) where, in each one set of energy storage devices (2), the positive electrode terminals (17) of the adjacent energy storage devices (2) are electrically connected in parallel by a connecting member (26, 27, 28, 29, 30) and the negative electrode terminals (19) of the adjacent energy storage devices (2) are electrically connected in parallel by a connecting member (26, 27, 28, 29, 30), and
a positive electrode terminal group and a negative electrode terminal group of the plural sets of energy storage devices (2) are electrically connected in series by a continuous portion of the connecting member (26, 27, 28, 29, 30).

## Patentansprüche

1. Verfahren zur Herstellung einer Energiespeichervorrichtung, die mehrere Energiespeichereinrichtungen (2) enthält, wovon jede mit einem positiven Elektrodenanschluss (17) und einem negativen Elektrodenanschluss (19) mit jeweils Anschlusshöhenmessbereichen versehen ist, die sich in einer Oberflächenform unterscheiden, wobei das Verfahren umfasst:
Messen einer Höhe des Anschlusshöhenmessbereichs des positiven Elektrodenanschlusses (17) und einer Höhe des Anschlusshöhenmessbereichs des negativen Elektrodenanschlusses (19); und
Vergleichen der gemessenen Höhe des positiven Elektrodenanschlusses (17) und der gemessenen Höhe des negativen Elektrodenanschlusses (19) mit einem Referenzwert.

2. Verfahren zur Herstellung einer Energiespeichervorrichtung nach Anspruch 1, wobei
auf der Grundlage eines Messergebnisses von Höhen der Anschlusshöhenmessbereiche,
auf einmal ausgeführt werden: eine Ermittlung eines Fehlers in einer Höhenrichtung zwischen den positiven Elektrodenanschlüssen (17), die benachbart zueinander liegen, eine Ermittlung eines Fehlers in der Höhenrichtung zwischen den negativen Elektrodenanschlüssen (19), die zueinander benachbart liegen, eine Ermittlung eines Fehlers in der Höhenrichtung zwischen dem positiven Elektrodenanschluss (17) und dem negativen Elektrodenanschluss (19), und eine Ermittlung, ob der Elektrodenanschluss der positive Elektrodenanschluss (17) oder der negative Elektrodenanschluss (17) ist.

3. Verfahren zur Herstellung einer Energiespeichervorrichtung nach Anspruch 1 oder 2, wobei, nachdem die Höhen der Anschlusshöhenmessbereiche gemessen sind,
die positiven Elektrodenanschlüsse (17), die benachbart zueinander angeordnet sind, durch ein leitendes Element miteinander verbunden werden, die negativen Elektrodenanschlüsse (19), die benachbart zueinander angeordnet sind, durch ein leitendes Element miteinander verbunden werden, oder der positive Elektrodenanschluss (17) und der negative Elektrodenanschluss (19) durch ein leitendes Element miteinander verbunden werden.

4. Verfahren zur Herstellung einer Energiespeichervorrichtung nach einem der Ansprüche 1 bis 3, wobei das Messen von Höhen der Anschlusshöhenmessbereiche so ausgeführt wird, dass die Höhe des Anschlusshöhenmessbereichs des positiven Elektrodenanschlusses (17) und die Höhe des Anschlusshöhenmessbereichs des negativen Elektrodenanschlusses (19) entlang einer Anordnungsrichtung der Energiespeichereinrichtungen (2) nacheinander gemessen werden.

5. Verfahren zur Herstellung einer Energiespeichervorrichtung nach einem der Ansprüche 1 bis 4, wobei das Messen der Höhen der Anschlusshöhenmessbereiche unter Anwendung einer berührungslosen Messeinrichtung (37) ausgeführt wird.

6. Energiespeichervorrichtung, mit:
mehreren Energiespeichereinrichtungen (2), wobei jede Energiespeichereinrichtung (2) einen positiven Elektrodenanschluss (17) und einen negativen Elektrodenanschluss (19) hat,
wobei positive Elektrodenanschlüsse (17), die benachbart angeordnet sind, durch ein leitendes Element (26, 27, 28, 29, 30) durch Schweißung verbunden sind, oder
wobei negative Elektrodenanschlüsse (19), die benachbart angeordnet sind, durch das leitende Element (26, 27, 28, 29, 30) durch Schweißung verbunden sind, oder
wobei der positive Elektrodenanschluss (17) und der negative Elektrodenanschluss (19) durch das leitende Element (26, 27, 28, 29, 30) durch Schweißung verbunden sind, und
die positiven Elektrodenanschlüsse (17) und die negativen Elektrodenanschlüsse (19) entsprechend Anschlusshöhenmessbereiche aufweisen, die sich in ihrer Oberflächenform unterscheiden.

7. Energiespeichervorrichtung nach Anspruch 6, wobei der Anschlusshöhenmessbereich des positiven Elektrodenanschlusses (17) einen hervorstehenden Bereich oder einen vertieften Bereich (25) hat.

8. Energiespeichervorrichtung nach Anspruch 6 oder 7, wobei der Anschlusshöhenmessbereich des negativen Elektrodenanschlusses (19) einen hervorstehenden Bereich oder einen vertieften Bereich (25) hat.

9. Energiespeichervorrichtung nach Anspruch 7 oder 8, wobei der positive Elektrodenanschluss (17) oder der negative Elektrodenanschluss (19) aus einem Anschlusskörperbereich (22) und einem Schaftbereich (23), der sich aus dem Anschlusskörperbereich (22) erstreckt, gebildet ist, und
der hervorstehende Bereich oder der vertiefte Bereich (25) auf dem Anschlusskörperbereich (22) ausgebildet ist.

10. Energiespeichervorrichtung nach Anspruch 8, wobei der Anschlusshöhenmessbereich des negativen Elektrodenanschlusses (19) der hervorstehende Bereich ist, und
der hervorstehende Bereich (43a) als ein Kopfbereich (43a) eines Anschlussbefestigungselements ausgebildet ist.

11. Energiespeichervorrichtung nach einem der Ansprüche 7 bis 10, die ferner ein leitendes Element aufweist, das mit dem positiven Elektrodenanschluss (17) oder dem negativen Elektrodenanschluss (19) verbunden ist, und
ein vertiefter Bereich (25) auf dem leitenden Element an einer Stelle ausgebildet ist, die dem hervorstehenden Bereich entspricht.

12. Energiespeichervorrichtung nach Anspruch 6, wobei die Energiespeichervorrichtung mehrere Gruppen aus Energiespeichereinrichtungen (2) aufweist, wobei in jeder Gruppe aus Energiespeichereinrichtungen (2) die positiven Elektrodenanschlüsse (17) der benachbarten Energiespeichereinrichtungen (2) durch ein Verbindungselement (26, 27, 28, 29, 30) elektrisch parallel geschaltet sind, und die negativen Elektrodenanschlüsse (19) der benachbarten Energiespeichereinrichtungen (2) durch ein Verbindungselement (26, 27, 28, 29, 30) elektrisch parallel geschaltet sind, und
eine positive Elektrodenanschlussgruppe und eine negative Elektrodenanschlussgruppe der mehreren Gruppen der Energiespeichereinrichtungen (2) durch einen zusammenhängenden Bereich des Verbindungselements (26, 27, 28, 29, 30) elektrisch in Reihe geschaltet sind.

## Revendications

1. Procédé de fabrication d'un appareil de stockage d'énergie qui comprend une pluralité de dispositifs de stockage d'énergie (2) munis chacun d'une borne d'électrode positive (17) et d'une borne d'électrode négative (19) ayant respectivement des parties de mesure de hauteur de borne qui diffèrent par une forme de surface, le procédé comprenant:
la mesure d'une hauteur de la partie de mesure de la hauteur de la borne d'électrode positive (17) et d'une hauteur de la partie de mesure de la hauteur de la borne d'électrode négative (19); et
la comparaison de la hauteur mesurée de la borne d'électrode positive (17) et de la hauteur mesurée de la borne d'électrode négative (19) avec une valeur de référence.

2. Procédé de fabrication d'un appareil de stockage d'énergie selon la revendication 1, dans lequel
sur la base d'un résultat de mesure de la hauteur des parties de mesure de la hauteur des bornes,
les opérations de détermination d'une erreur dans une direction de hauteur entre les bornes d'électrode positive (17) disposées l'une à côté de l'autre, de détermination d'une erreur dans la direction de hauteur entre les bornes d'électrode négative (19) disposées l'une à côté de l'autre, de détermination d'une erreur de direction de hauteur entre la borne d'électrode positive (17) et la borne d'électrode négative (19), et de détermination du caractère positif ou négatif de l'électrode (17) de l'électrode de l'électrode (17), se déroulent immédiatement.

3. Procédé de fabrication d'un appareil de stockage d'énergie selon les revendications 1 ou 2, dans lequel, après les hauteurs des bornes, on mesure des parties de mesure de hauteur,
les bornes d'électrode positive (17) disposées adjacentes sont reliées l'une à l'autre par un élément conducteur, les bornes d'électrode négative (19) disposées adjacentes sont reliées l'une à l'autre par un élément conducteur, ou la borne d'électrode positive (17) et la borne d'électrode négative (19) sont reliées l'une à l'autre par un élément conducteur.

4. Procédé de fabrication d'un appareil de stockage d'énergie selon l'une quelconque des revendications 1 à 3, dans lequel la mesure des hauteurs des parties de mesure de hauteur des bornes est effectuée de telle sorte que la hauteur de la partie de mesure de hauteur des bornes de l'électrode positive (17) et la hauteur de la partie de mesure de hauteur des bornes de l'électrode négative (19) sont mesurées successivement selon une direction de disposition des appareils de stockage d'énergie (2).

5. Procédé de fabrication d'un appareil de stockage d'énergie selon l'une quelconque des revendications 1 à 4, dans lequel la mesure des hauteurs des parties de mesure de hauteur terminale est effectuée en utilisant un dispositif de mesure sans contact (37).

6. Appareil de stockage d'énergie comprenant:
une pluralité de dispositifs de stockage d'énergie (2), chaque dispositif de stockage d'énergie (2) ayant une borne d'électrode positive (17) et une borne d'électrode négative (19),
dans lequel les bornes d'électrode positive (17) disposées adjacentes sont reliées par un élément conducteur (26, 27, 28, 29, 30) par soudage, ou
dans lequel les bornes d'électrode négative (19) disposées adjacentes sont reliées par l'élément conducteur (26, 27, 28, 29, 30) par soudage, ou
dans lequel la borne d'électrode positive (17) et la borne d'électrode négative (19) sont reliées par l'élément conducteur (26, 27, 28, 29, 30) par soudage, et
les bornes d'électrode positive (17) et les bornes d'électrode négative (19) présentent respectivement des parties de mesure de hauteur de borne qui diffèrent par une forme de surface.

7. Appareil de stockage d'énergie selon la revendication 6, dans lequel la partie de mesure de la hauteur de la borne d'électrode positive (17) présente une partie saillante ou une partie rétreinte (25).

8. Appareil de stockage d'énergie selon les revendications 6 ou 7, dans lequel la partie de mesure de la hauteur de la borne d'électrode positive (19) présente une partie saillante ou une partie rétreinte (25).

9. Appareil de stockage d'énergie selon les revendications 7 ou 8, dans lequel la borne d'électrode positive (17) ou la borne d'électrode négative (19) sont constituées d'une partie de corps de borne (22) et d'une partie d'arbre (23) s'étendant depuis la partie de corps de borne (22), et
la partie saillante ou la partie rétreinte (25) sont formées sur la partie de corps de borne (22).

10. Appareil de stockage d'énergie selon la revendication 8, dans lequel la partie de mesure de la hauteur de la borne d'électrode négative (19) présente la partie saillante, et
la partie saillante (43a) est formée d'une partie de tête (43a) d'un élément de fixation de borne.

11. Appareil de stockage d'énergie selon l'une quelconque des revendications 7 à 10, comprenant en outre un élément conducteur connecté à la borne d'électrode positive (17) ou à la borne d'électrode négative (19), et
une partie en retrait (25) est formée sur l'élément conducteur à une position qui correspond à la partie saillante.

12. Appareil de stockage d'énergie selon la revendication 6, dans lequel le dispositif de stockage d'énergie comprend plusieurs ensembles de dispositifs de stockage d'énergie (2) où, dans chaque ensemble de dispositifs de stockage d'énergie (2), les bornes d'électrode positive (17) des dispositifs de stockage d'énergie adjacents (2) sont reliées électriquement en parallèle par un élément de liaison (26, 27, 28, 29, 30) et les bornes d'électrode négative (19) des dispositifs de stockage d'énergie adjacents (2) sont reliées électriquement en parallèle par un élément de liaison (26, 27, 28, 29, 30), et
un groupe de bornes d'électrode positive et un groupe de bornes d'électrode négative des plusieurs ensembles de dispositifs de stockage d'énergie (2) sont connectés électriquement en série par une partie continue de l'élément de connexion (26, 27, 28, 29, 30).
